# EUROPEAN PATENT APPLICATION

(11) **EP 1 726 362 A1**
(43) Date of publication of application: **29.11.2006**
(21) Application number: 05076393.7
(22) Date of filing: 15.06.2005
(51) Int. Cl.: B01L 7/00, C12M 1/00, H01Q 1/36, H01Q 9/27, H01Q 1/22

(54) **Apparatus for communicating with a memory tag, and for providing a temperature-controlled surface**

(30) Priority: 24.05.2005 GB 0502048
(71) Applicant: IVF Limited, Falmouth Cornwall TR11 4TA (GB)
(72) Inventor: Landsdowne, David Charles, Flushing, Cornwall TR11 5TP (GB)
(74) Representative: Ribeiro, James Michael

(57) **Abstract**

A work station comprising a surface for supporting a sample; a temperature controller for controlling the temperature of the surface; and apparatus for communicating with a memory tag via a wireless electromagnetic link. The apparatus is located beneath the surface in order to communicate with a memory tag on or over the surface. A soft magnetic member is provided. The temperature controller comprises a chamber containing a liquid; a pump for pumping the liquid into the chamber; an inlet channel between the pump and the chamber; and an inlet weir extending across the inlet channel so as to impede the flow of liquid through the inlet channel into the main chamber.

## Description

A first aspect of the invention relates to apparatus for communicating with a memory tag (such as an RFID tag) via a wireless electromagnetic link. The apparatus is typically (although not exclusively) for the identification of temperature-controlled samples, such as biological samples for use in in-vitro fertilisation processes. A second aspect of the invention provides apparatus for providing a temperature-controlled surface.

In-vitro fertilisation is a process which is intended to enable a woman, apparently unable to conceive naturally, to gestate and give birth by implantation, in the womb, of an externally-fertilised egg. During the process, unfertilised eggs are collected from the patient's ovaries and admixed with sperm from the woman's partner for fertilisation purposes, the fertilised egg then being re-implanted in the womb for gestation. Clearly, it is important for the procedure to be administered under a rigorous and carefully-controlled protocol to ensure that the eggs are fertilised with sperm from the intended partner; various instances have been reported in the media concerning unintended and highly distressing errors which become apparent following birth. To this end, the Human Fertilisation and Embryology Authority operates a so-called "locked in process", in which the procedure is witnessed at every stage by a person additional to the operative to ensure, as far as possible, that mistakes such as have been made in the past are not repeated in the future. The procedure is consequently expensive to operate and administer and, in any event, the possibility of human error cannot entirely be eliminated.

Various aspects of the invention are provided as set out in the appended claims.

Embodiments of invention will now be described by way of example with reference to the accompanying drawings, of which:
Figure 1 is a diagrammatic view of a work station utilising one form of heating means;
Figure 2 is a diagrammatic view of another embodiment using another form of heating means;
Figure 3 is an isometric view of the upper side of a table-top work station;
Figure 4 shows upper side of the table-top work station with the housings removed;
Figure 5 is an isometric view of the underside of the table-top work station;
Figure 6 shows the underside of the table-top work station with the lower plate removed;
Figure 7 shows the underside of the upper plate only;
Figure 8 shows the underside of the lower plate only; and
Figures 9-11 show the underside of the upper plate with various different configurations of soft magnetic strips.

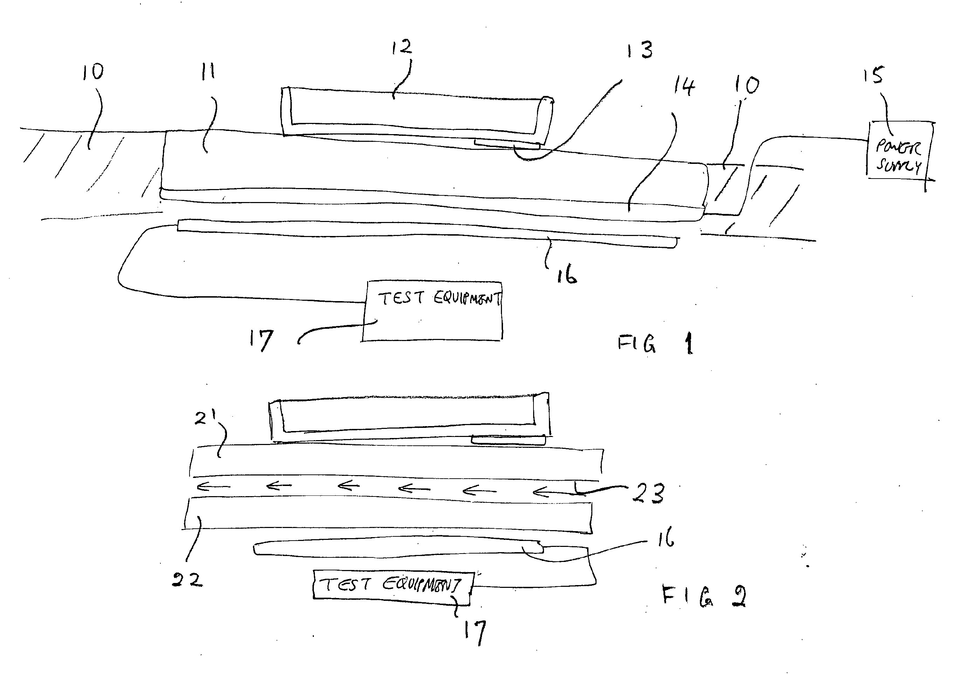

With reference firstly to Figure 1, the apparatus consists essentially of a stainless steel workbench surface (10) having an insert defining a work area and consisting of a toughened glass plate (11). A petri dish (12) having an RFID tag (13) attached to the under surface thereof is placed on the work station. The glass plate (11) carries a lower coating or deposit (14) formed from indium tin oxide, the layer being electrically connected to a power supply to provide an even heating current. An antenna (16) is disposed below the work station and connected to test equipment (17).

In use, the antenna coil transmits activation signals to the RFID tag (13) which itself transmits identification signals back to the antenna, the signals being processed in the test equipment (17). The power supply (15) supplies energy to the indium tin oxide layer (14) for heating purposes; the heat generated is transmitted through the plate (11) to maintain the upper surface of the plate at the desired temperature.

With reference to Figure 2, the work station consists essentially of upper and lower Corian (Registered Trade Mark) plates (21, 22) set into a workbench as shown in Figure 1. The plates are spaced apart to define a gap (23) through which temperature-controlled water is passed in laminar flow to maintain the upper surface of the work station at the desired temperature. The work station is provided with an antenna and test equipment as described and illustrated with reference to Figure 1.

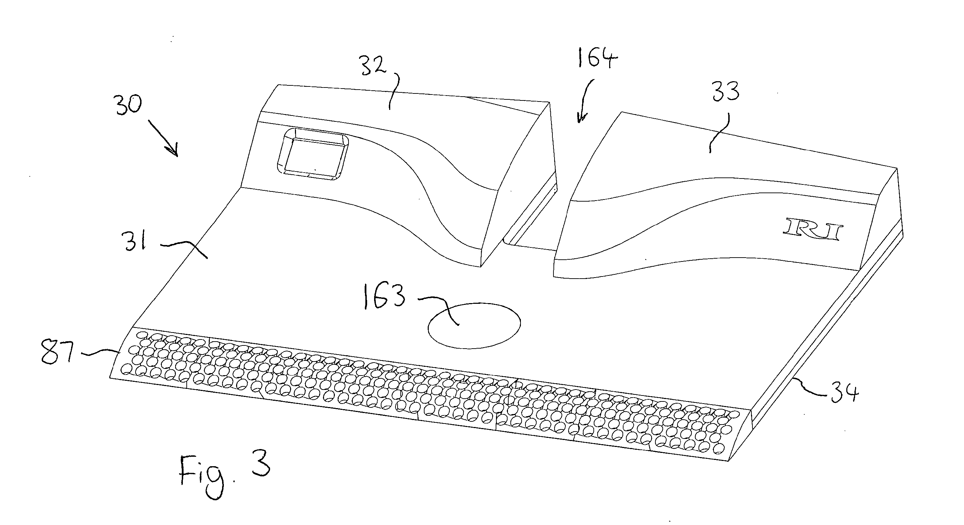

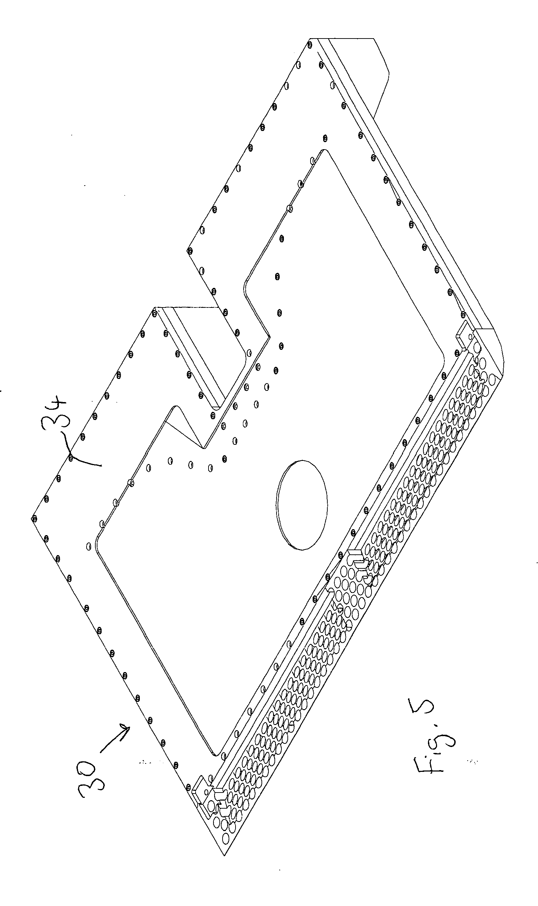

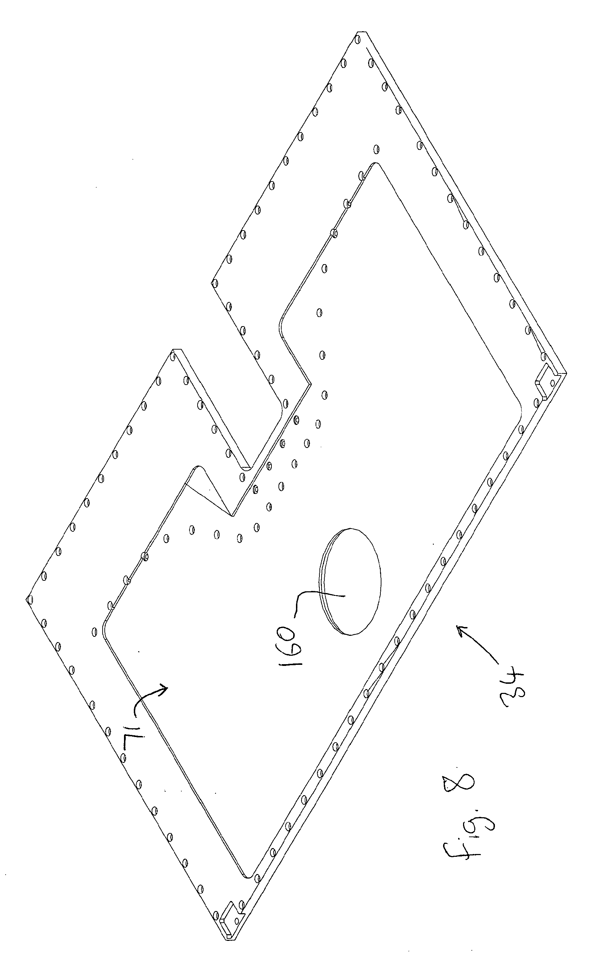

Referring to Figures 3-8, a table-top workstation 30 comprises a Corian™ upper plate 31, a pair of housings 32, 33 which are mounted to the upper plate 31, and a Corian™ lower plate 34.

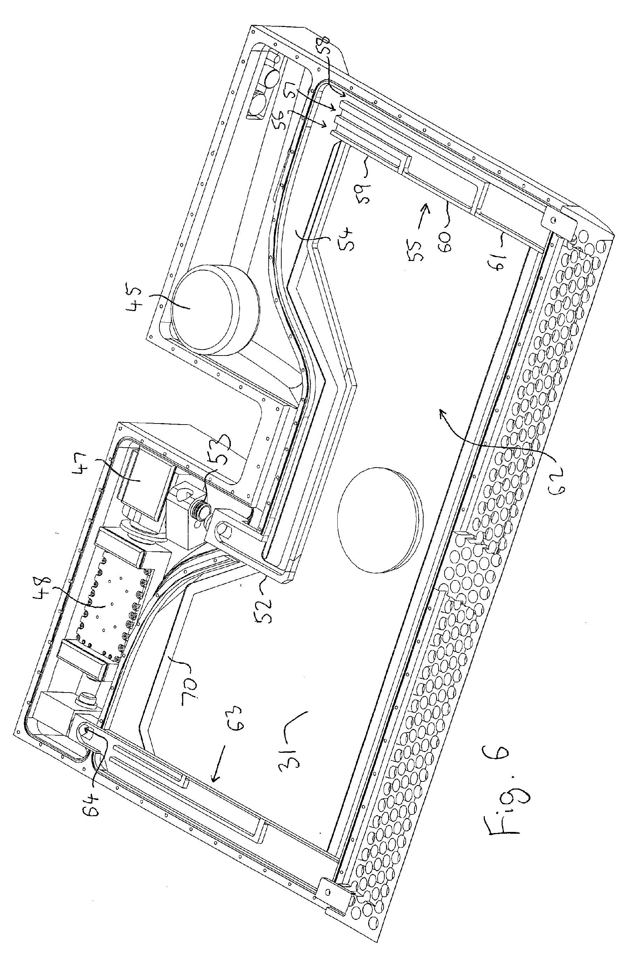

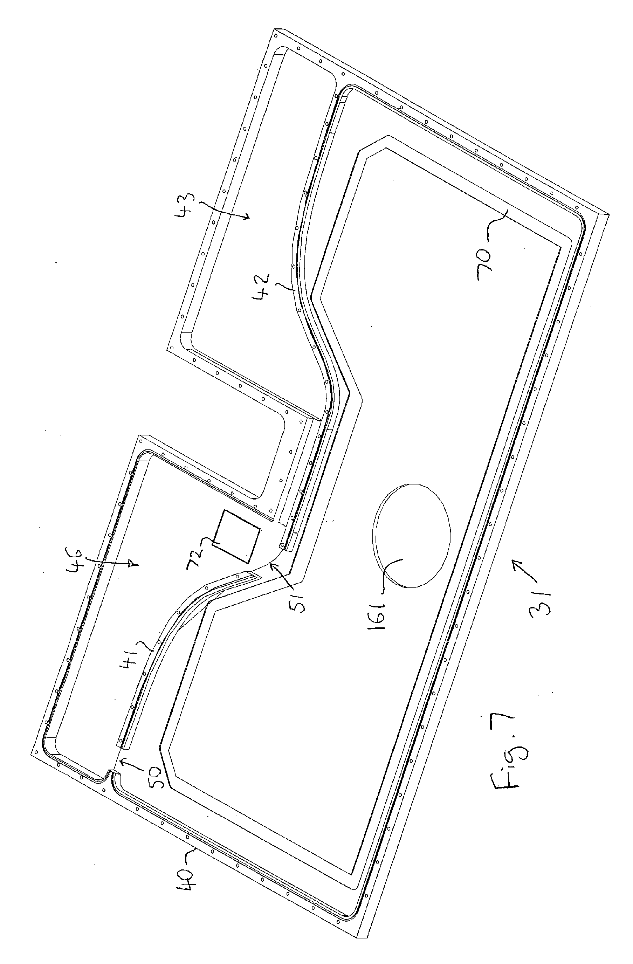

Figure 7 shows the underside of the device with the lower plate 34 removed. As shown in Figure 7, the underside of the upper plate 31 has a flange 40 running around its outer periphery, and dividers 41, 42. The flange 40 and dividers 41, 42 have holes (not labeled) which receive screws (shown in Figure 6) which screw the lower plate 34 to the upper plate 31. A space 50 is provided between the divider 41 and the flange 40, and a space 51 is provided between the divider 42 and the divider 41.

The upper plate 31 has a hole 43 which receives a display unit 44 and a transformer 45, which are mounted to the lower plate 34.

The upper plate 31 also has a hole 46 which receives a water pump 47 and an Aluminium heater block 48, also mounted to the lower plate 34. Wires (not shown) connect the pump 47 to the transformer 45, which provides power to the pump.

A sealing block 52 fits into the space 51, and has an inlet which is connected to an outlet 53 of the pump by a pipe (not shown). The sealing block 52 channels water from the pump via a channel 54 to a water flow distribution block 55. The upper wall of the channel 54 is formed by the upper plate 31, and the lower wall of the channel 54 is formed by the lower plate 34 (not shown in Figure 6).

The flow distribution block comprises two L-shaped walls which divide the flow into three inlet channels 56-58, and three inlet weirs 59-61 which extend across the inlet channels 56-58. The inlet weirs 59-61 have a height approximately 0.3mm less than the L-shaped walls, thus impeding the flow, but providing a 0.3mm slit through which water can flow out of the inlet channels 56-58 into a main water chamber 62. The inlet channels 56-58 distribute the flow uniformly across the width (front to back) of the chamber 62, and the inlet weirs 59-61 ensure laminar flow across the width of the outlets of the inlet channels 56-58.

The water flows across the main chamber 62 and exits via a water collection block 63 which is identical to the flow distribution block 55 and therefore will not be described in detail. The water collection block 63 directs flow through an outlet 64 into the heater block 48 which is connected in turn to an inlet of the pump 47.

The flow rate is kept as high as possible to ensure that the temperature drop between the flow distribution block 55 and the water collection block 63 is as small as possible.

The lower and upper plates have circular holes 160, 161 respectively which receive respective glass windows 162, 163. A slot 164 (shown in Figure 3) receives a stereo-zoom microscope in use. Light is projected upwardly through the glass windows 162, 163 into a vessel (such as a petri dish) placed on the glass window 163, enabling the microscope to view the sample.

A channel 70 (which forms a closed loop) is formed in the underside of the upper plate, and receives an RFID antenna (not shown) in use. The antenna comprises a single turn of adhesive copper strip which is spray-coated with waterproof insulating material. The ends of the copper strip pass through hole 51 where they are connected to a small PCB-mounted tuning circuit 72. The tuning circuit includes an impedance matching transformer; adjustable series and parallel capacitances; and an adjustable series resistance. The adjustable capacitances and resistances enable the antenna to be tuned.

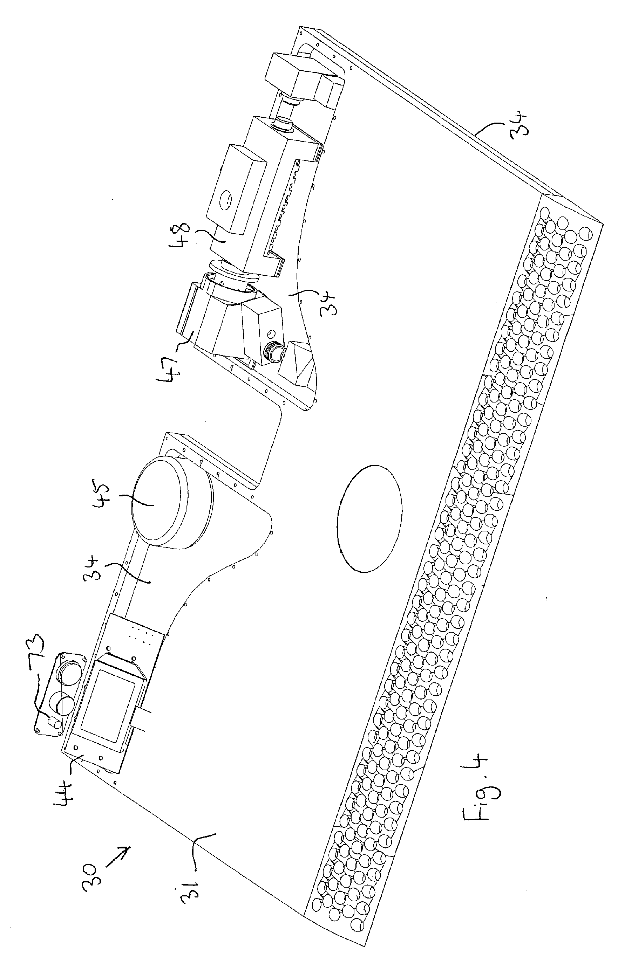

A coaxial cable (not shown) connects the tuning circuit to a coaxial output port 73 shown in Figure 4.

In the embodiment shown, the antenna is placed above the water, but in an alternative embodiment (not shown) the antenna coil may be placed below the water.

The underside of the lower plate 34 has a shallow recess 71 which receives a continuous sheet of self-adhesive soft magnetic material (not shown), cut with a hole around the glass window. The material may be any of the materials described in EP-A-1484816. Preferably the material is a sheet of EMI suppression material, Product Code PE73 or PE73, provided by FDK Corporation of Tokyo, Japan. This product is chosen due to its high initial permeability.

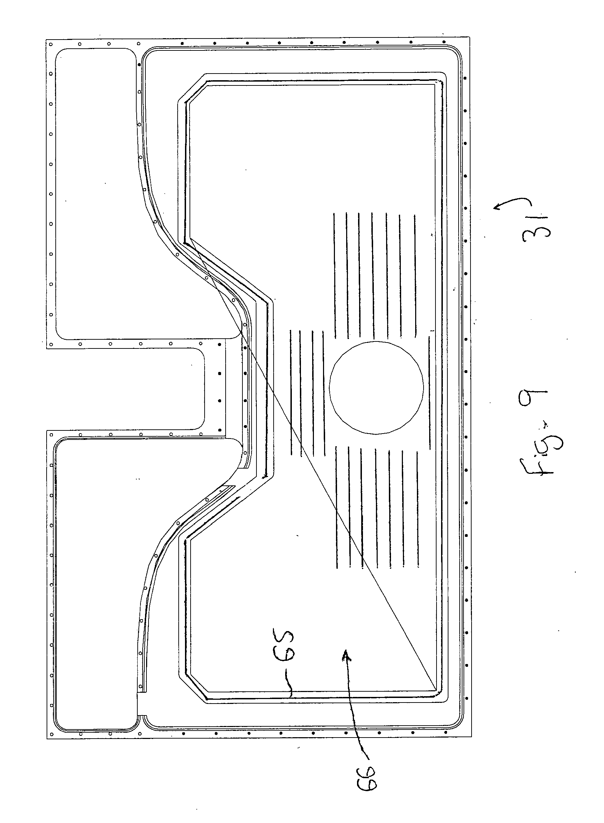

The sheet of soft magnetic material forms a shield which decouples the antenna coil from any surrounding metal work. When viewed along an antenna axis (transverse to Figures 9-11) the sheet overlaps slightly with the coil in order to maximize the shielding effect.

Strips of self-adhesive soft magnetic material are also attached to the upper plate 31. The strips may be formed from the same material as the shielding sheet mounted on the lower plate, or from a different soft magnetic material. Various patterns may be used, and examples are given in Figures 9-11. In each case, the strips are approximately 100mm long, 2 mm wide, and spaced apart by 2mm.

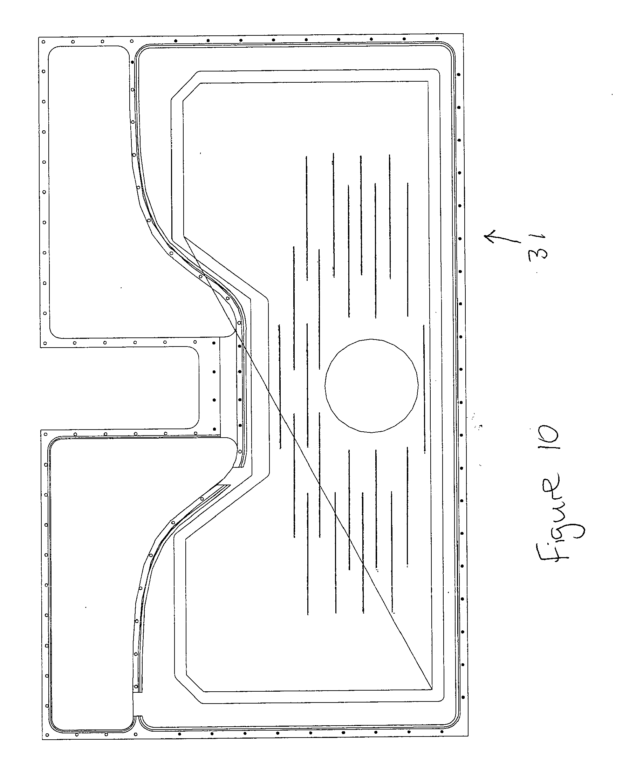

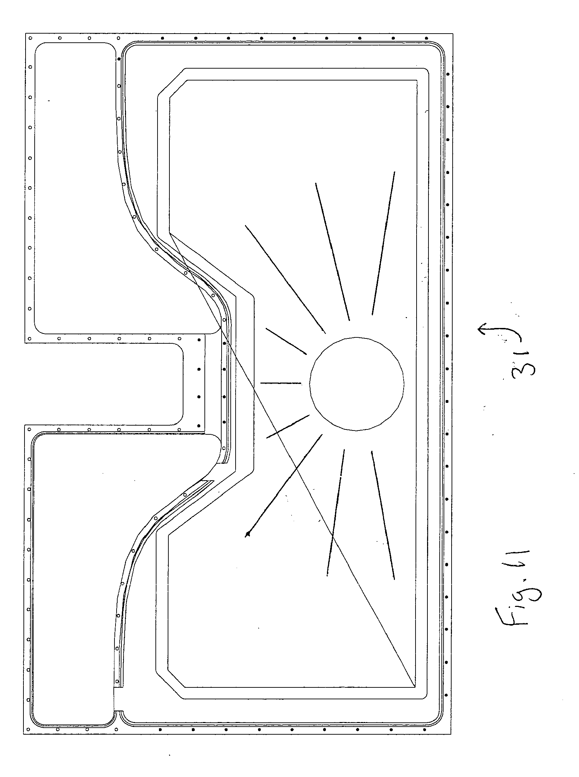

In the case of Figure 9, the strips are arranged in parallel. In the case of Figure 10, the strips are arranged in parallel in a "brickwork" pattern with successive lines of strips offset from each other. In the case of Figure 11, the strips radiate outwardly from the glass windows 62, 63.

The antenna is indicated schematically at 65. The antenna 65 has an inner edge defining an antenna axis (transverse to Figure 9) and a coil interior 66. Each strip of soft magnetic material, when viewed along the antenna axis as in the view of Figure 9, overlaps with some, but not all, of the coil interior 66. The same is true for the strips in Figures 10 and 11. The magnetic field is circular (toroidal) around the coil 65. The intensity gets weaker as the distance from the coil 65 increases. In order to obtain a more even field across the coil interior, the strips of soft magnetic material are spaced from the coil towards the centre of the coil interior. Thus, in contrast to the continuous sheet housed in the shallow recess 71 (which decouples the coil from surrounding metal work), the strips perform a different function of manipulating the magnetic field in the coil interior. The strips may lie in the same plane as the coil, or may be positioned above or below the plane of the coil.

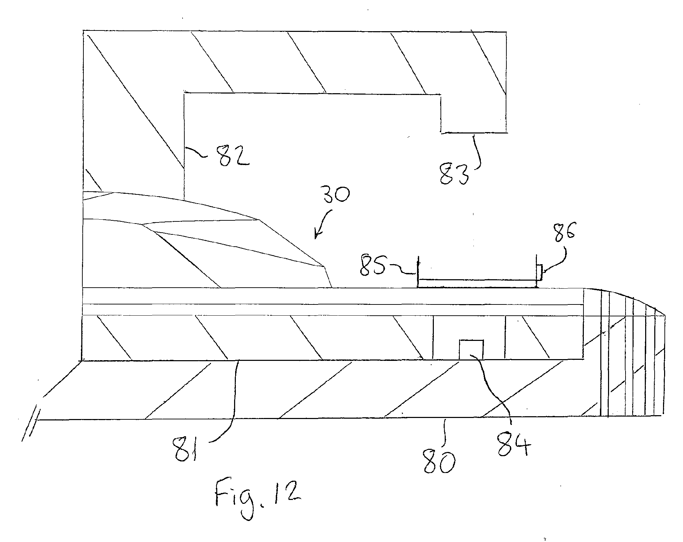

The workstation 30 is shown in use in Figure 12. A stainless steel table 80 in a ventilated cabinet (not shown) has a recess in its upper face which receives the base 81 of a microscope. The microscope has a column 82 passing through the slot 64 in the rear of the workstation 30, and head 83 positioned above the glass window 63. A lamp 84 is positioned below the glass window 62 to illuminate a sample in a vessel 85 carrying an RFID tag 86. The workstation has a removable perforated wrist-rest 87 which is positioned above a perforated region of the table 80. The perforations permit the circulation of air in the ventilated cabinet.

In an alternative embodiment (not shown), the embodiment of Figure 2 may incorporate a sheet of shielding soft magnetic material with side walls which pass between the edge of the workbench 10 and the glass plate 11, and a base which runs below the coil 16 (the shield forming a U-shape in cross-section). Strips of soft magnetic material (formed in one of the patterns shown in Figures 9-11 may be adhered to the indium tin oxide layer 14.

In an alternative embodiment (not illustrated), the heating arrangement shown in Figure 6 (employing inlet and outlet weirs) may be used to provide a temperature controlled surface in an alternative application, without incorporating an RFID reader.

In further alternative embodiments, the water, or another liquid medium, may be used to cool a sample instead of heating the sample.

## Claims

1. A work station comprising a surface for supporting a sample; a temperature controller for controlling the temperature of the surface; and an antenna for communicating with a memory tag via a wireless electromagnetic link, the antenna being located beneath the surface in order to communicate with a memory tag on or over the surface; and a soft magnetic member.

2. A work station according to claim 1 wherein the temperature controller comprises a heater.

3. Apparatus for communicating with a memory tag via a wireless electromagnetic link, the apparatus comprising an antenna coil which has an inner edge defining an antenna axis and a coil interior; and a soft magnetic member which, when viewed along the antenna axis, overlaps with some, but not all, of the coil interior.

4. Apparatus according to claim 3 comprising two or more soft magnetic members, each of which, when viewed along the antenna axis, overlaps with some, but not all, of the coil interior.

5. Apparatus according to claim 3 or 4 further comprising a shielding soft magnetic member which, when viewed along the antenna axis, overlaps with the coil.

6. A work station comprising a plate for supporting a sample; a temperature controller for controlling the temperature of the plate; and an antenna for communicating with a memory tag via a wireless electromagnetic link, the antenna being located beneath the plate in order to communicate with a memory tag on or over the plate; wherein the plate is thermally conducting from one face to the other, and the temperature controller is in thermal contact with a lower face of the plate.

7. A work station according to claim 6, in which the plate comprises an electrically-insulating or resistive plate.

8. A work station according to claim 6 or 7, in which the plate comprises a glass plate, and the temperature controller comprises an electrically-conducting heating layer provided as a coating on the lower face of the plate.

9. A work station according to claim 6 or 7 wherein the electrically-conducting heating layer comprises a layer of indium tin oxide.

10. A work station according to claim 6 or 7, wherein the temperature-controller comprises a liquid.

11. A work station according to claim 10, further comprising a chamber containing the liquid; a pump for pumping the liquid into the chamber; an inlet channel between the pump and the chamber; and an inlet weir extending across the inlet channel so as to impede the flow of liquid through the inlet channel into the main chamber.

12. A work station according to claim 11 wherein the inlet weir is elongate in a direction transverse to a direction of flow of water across the inlet weir.

13. A work station according to claim 11 or 12 further comprising one or more additional inlet channels between the pump and the chamber; each additional inlet channel having an inlet weir extending across the additional inlet channel so as to impede the flow of liquid through the additional inlet channel into the main chamber.

14. A work station according to any of claims 11 to 13, further comprising an outlet channel; and an outlet weir extending across the outlet channel so as to impede the flow of liquid from the main chamber into the outlet channel.

15. A work station according to claim 14 wherein the outlet weir is elongate in a direction transverse to a direction of flow of water across the outlet weir.

16. A work station according to any of claims 1 to 15 further comprising one or more additional outlet channels; each additional outlet channel having an outlet weir extending across the additional outlet channel so as to impede the flow of liquid from the main chamber into the additional outlet channel.

17. Apparatus for providing a temperature-controlled surface, the apparatus comprising a thermally conducting plate; a chamber containing a liquid in thermal contact with the plate; a pump for pumping the liquid into the chamber; an inlet channel between the pump and the chamber; and an inlet weir extending across the inlet channel so as to impede the flow of liquid through the inlet channel into the chamber.
